# EUROPEAN PATENT APPLICATION

(11) **EP 4 625 040 A1**
(43) Date of publication of application: **01.10.2025**
(21) Application number: 23892950.9
(22) Date of filing: 29.03.2023
(51) Int. Cl.: G03B 21/60

(54) **TRANSPARENT PROJECTION FILM, MANUFACTURING METHOD AND PROJECTION SYSTEM**

(30) Priority: 22.11.2022 CN 202211474367
(71) Applicant: TD Electrooptic Films (TDEF) Inc., Suzhou, Jiangsu 215500 (CN)
(72) Inventor: LU, Jiawei, Suzhou, Jiangsu 215500 (CN); QIAN, Mingzhou, Suzhou, Jiangsu 215500 (CN); XUE, Jiuzhi, Suzhou, Jiangsu 215500 (CN)
(74) Representative: Gille Hrabal Partnerschaftsgesellschaft mbB Patentanwälte
(86) International application number: PCT/CN2023/084832
(87) International publication number: WO 2024/108845

(57) **Abstract**

The present invention relates to a transparent projection film, its preparation method, and a projection system. The transparent projection film comprises a substrate layer, a microstructure layer, a display layer, and a refractive index matching layer, wherein the microstructure layer comprises a plurality of prisms arranged parallel on the second surface of the substrate layer, along with random structures positioned on these prism structures. This structural design enables the transparent projection film to be suitable for short focus projectors and capable of producing uniform brightness and a larger viewing angle. Furthermore, the microstructure layer can be prepared using conventional machining processes, making the manufacturing process simple, cost-effective, and suitable for mass production.

## Description

This application claims the benefit of the China Patent Application No. CN202211474367.8 filed on Nov. 22, 2022, titled "Transparent Projection Film, Preparation Method Thereof And Projection System", and the contents of this application are incorporated herein by reference in their entirety.

### TECHNICAL FIELD

The present invention generally relates to the technical field of projection display, and more particularly, to a transparent proception film, a preparation method thereof and a projection system.

### BACKGROUND

With the increasing demand for human-computer interaction and technological experience, transparent projection technology has seen significant development. Currently, in transparent projection systems, to ensure picture brightness and clarity, long focus projectors are typically required, along with a large space needed for installing the projector. This poses considerable challenges in terms of construction and after-sales services. On the other hand, short focus projectors can effectively control the distance between the projector and the display unit, occupying minimal floor space. However, due to shortened distance between the short focus projector and the screen, it becomes difficult to achieve an even distribution of projection distance, leading to uneven picture brightness on the display screen.

Patent application CN113204165A discloses a transparent projection screen with a Fresnel structure and its application in a projection system. The Fresnel-structured transparent projection screen is suitable for short focus projection systems. However, due to the complexity of the Fresnel structure, the manufacturer process for producing the Fresnel layer on the substrate film involves relatively high difficulty. In actual production, it is not possible to directly obtain a finished product with a surface featuring concave - convex structures through only two stable processes. This limitation restricts its application.

### SUMMARY

The present application primarily addresses the technical problem of high production difficulty and inability to mass-produce projection films for short focus projection systems.

To achieve the above objectives, the present application provides a transparent projection film comprising:
a substrate layer having a first surface and a second surface that are oppositely and parallelly arranged, both being flat surfaces;
a microstructure layer comprising a plurality of prism structures extending along a first direction and arranged parallelly along a second direction on the second surface of the substrate layer, wherein the first direction intersects the second direction; a surface of each prism structure adjacent to the second surface of the substrate layer is defined as a bottom surface c, and a plurality of said bottom surfaces c form a first surface of the microstructure layer; a surface of each prism structure away from the second surface of the substrate layer is defined side surfaces a and b, and a plurality of said side surfaces a and b form a second surface of the microstructure layer; an angle between the side surfaces a and b is defined as a vertex angle α of the prism structure, where α≥55°; an angle between the side surface b and the bottom surface c is defined as a base angle β of the prism structure, where 15°<β<35°; the side surface b is oriented toward a direction of a short focus projector, and a random structure is disposed on the side surface b, the microstructure layer has a first refractive index n1;
a display layer having a first surface and a second surface of the display layer, wherein the first surface of the display layer is disposed on the second layer of the microstructure layer, and the second surface of the display layer is substantially conformal to the second surface of the microstructure layer, such that the display layer adopts a structure substantially identical to the second surface of the microstructure layer;
a refractive index matching layer having a first surface and a second surface of the refractive index matching layer facing away from each other, wherein the first surface of the refractive index matching layer is disposed on the second surface of the display layer and conformal to the second surface of the display layer, and the second surface of the refractive index matching layer is parallel to the first surface of the substrate layer; the refractive index matching layer has a second refractive index n2;
wherein the first refractive index and the second refractive index are identical or closely matched.

As a further improvement of the present application, a vertical distance h from an intersection of the side surface a and the side surface b to the bottom surface c is defined, wherein the vertical distance h, the vertex angle α, and a size of the bottom surface c of each prism structure remain unchanged or exhibit a gradient increase along the first direction.

As a further improvement of the present application, the random structure comprises convex or concave surface microstructures.

As a further improvement of the present application, the transparent projection film further comprises a touchscreen disposed on the first surface of the refractive index matching layer.

As a further improvement of the present application, the substrate layer, the microstructure layer, and the refractive index matching layer are made of flame-retardant materials.

As a further improvement of the present application, the flame-retardant materials are organic phosphorus-based, organic nitrogen-based, or phosphorus-nitrogen flame retardants.

To achieve the above objectives, the present application further provides a transparent projection system comprising: the aforementioned transparent projection film; and a short focus projector with a throw ratio range from 0.2 to 1.

To achieve the above objectives, the present application further provides a method for preparing the aforementioned transparent projection film, comprising the following steps:
S1. preparation of a template with surface microstructures: perform repairing and electroplating processes sequentially on a roller blank; place the electroplated roller blank on a machining tool; and obtain the template with surface microstructures using conventional machining techniques;
S2. preparation of the microstructure layer: prepare a substrate layer having a lower surface and an upper surface of the substrate layer opposite thereto; position the upper surface of the substrate layer beneath the template with surface microstructures; apply a first optically transparent resin between the substrate layer and the template, allowing the resin to conform to the surface microstructures of the template to form a film; and cure the resin to obtain the microstructure layer;
S3. preparation of the display layer: the microstructure layer has an upper surface and a lower surface of the microstructure layer, with the lower surface of the microstructure layer adjacent to the upper surface of the substrate; deposit a coating on the upper surface of the microstructure layer to form the display layer;
S4. preparation of the refractive index matching layer: apply a second optically transparent resin onto the display layer; form a film and cure to obtain the refractive index matching layer.

As a further improvement of the present application: in step S1, an angle of the prism structure is 10° to 40°, preferably 20° to 25°.

As a further improvement of the present application: in step S1, a depth of the prism structure is 2 µm to 30 µm, preferably 15 µm to 20 µm.

As a further improvement of the present application: in step S1, the electroplating material is copper, nickel, or chromium.

As a further improvement of the present application: the random microstructure has a depth range from 0.1 µm to 5 µm and a width range from 3 µm to 50 µm.

### Advantageous Effects:

The present application provides a transparent projection film wherein the microstructure layer comprises prism structures with specific angular configurations and random structures formed thereon for light-diffusing functionality. This structural design enables the film to achieve uniform brightness and a wide viewing angle when used with short focus projectors. Moreover, the microstructure layer can be fabricated using conventional processing techniques, resulting in a simple preparation process, low cost, and suitability for mass production.

### BRIEF DESCRIPTION OF THE DRAWINGS

FIG. 1 is a schematic structural diagram of the transparent projection film of the present application;
FIG. 2 is a schematic diagram of two configurations of the prism structure in the transparent projection film of the present application;
FIG. 3 is a schematic diagram of two configurations of the random structure in the transparent projection film of the present application;
FIG. 4 is a partial schematic diagram illustrating the preparation process of the transparent projection film of the present application;
FIG. 5 is a schematic structural diagram of an embodiment of a projection system constructed with the transparent projection film of the present application;
FIG. 6 is a schematic structural diagram of another embodiment of a projection system constructed with the transparent projection film of the present application;
FIG. 7 is a schematic diagram of electrical connections among the short-throw projector, touchscreen, and host device in the present application.

### References in the Drawings:

01: short focus projector;
1: transparent projection film;
2: touchscreen;
11: substrate layer;
12: microstructure layer;
13: display layer;
14: refractive index matching layer;
121: prism structure;
122: random structure.

### DETAILED DESCRIPTION OF EMBODIMENTS

To provide a clearer understanding of the objectives, technical solutions, and advantages of the present application, the technical solutions of the present application will be described in detail below in conjunction with specific embodiments and accompanying drawings. It is to be understood that the described embodiments are merely a portion of the embodiments of the present application and are not intended to limit the scope of the present invention. All other embodiments derived by persons of ordinary skill in the art based on the embodiments of the present application without creative efforts shall fall within the protection scope of the present application.

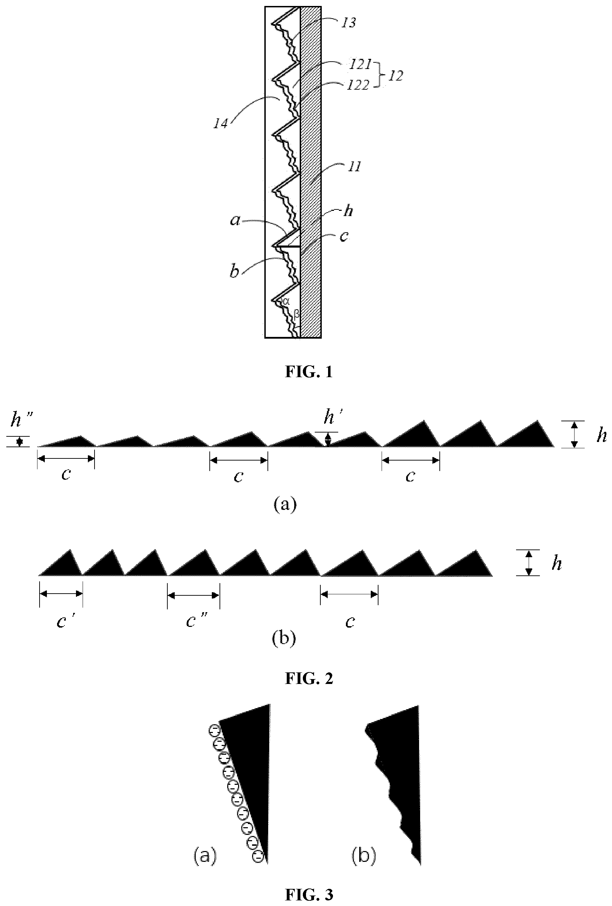

To address the technical challenges in the prior art, such as the high complexity in manufacturing transparent projection films 1 for short focus projection systems and the inability to achieve mass production, the present application provides a transparent projection film 1. As illustrated in FIG. 1, the film comprises: a substrate layer 11, a microstructure layer 12, a display layer 13, and a refractive index matching layer 14, wherein:
The substrate layer 11 has a first surface and a second surface that are oppositely and parallelly arranged, both being flat surfaces.

The microstructure layer 12 comprises a plurality of prism structures 121 extending along a first direction and arranged parallelly along a second direction on the second surface of the substrate layer. The first direction intersects the second direction. A surface of each prism structure 121 adjacent to the second surface of the substrate layer is defined as a bottom surface c, and a plurality of said bottom surfaces c form a first surface of the microstructure layer 121. A surface of each prism structure 121 away from the second surface of the substrate layer is defined side surfaces a and b, and a plurality of said side surfaces a and b form a second surface of the microstructure layer. An angle between the side surfaces a and b is defined as a vertex angle α of the prism structure 121, where α≥55°. An angle between the side surface b and the bottom surface c is defined as a base angle β of the prism structure 121, where 15°<β<35°. The side surface b is oriented toward a direction of a short focus projector 01, and a random structure 122 is disposed on the side surface b. The microstructure layer 12 has a first refractive index n1.

The display layer 13 has a first surface and a second surface of the display layer. The first surface of the display layer is disposed on the second layer of the microstructure layer, and the second surface of the display layer is substantially conformal to the second surface of the microstructure layer, such that the display layer 13 adopts a structure substantially identical to the second surface of the microstructure layer.

A refractive index matching layer 14 has a first surface and a second surface of the refractive index matching layer facing away from each other. The first surface of the refractive index matching layer is disposed on the second surface of the display layer and conformal to the second surface of the display layer, and the second surface of the refractive index matching layer is parallel to the first surface of the substrate layer; the refractive index matching layer 14 has a second refractive index n2;

Based on the aforementioned transparent projection film 1, the microstructure layer 12 of the present application comprises prism structures 121 with corrected angles and random structures 122 formed on the prism structures 121 to provide light-diffusing functionality. This structural design enables the transparent projection film 1 to deliver uniformly bright images with a wide viewing angle when applied to a short-throw projector 01.

According to a preferred implementation of this application, a vertical distance h from an intersection of the side surface a and the side surface b to the bottom surface c is defined, wherein the vertical distance h, the vertex angle α, and a size of the bottom surface c of each prism structure remain unchanged or exhibit a gradient increase along the first direction. More preferably, in the microstructure layer, the vertical distance h, base surface c, and vertex angle α of the prism structures 121 initially remain unchanged along the first direction and, after a plurality of repetitions, selectively exhibit a gradient increase. As illustrated in (a) and (b) of FIG. 2, two common configurations of prism structures are shown: the bottom surface c and vertical distance h remain unchanged respectively, while the other two parameters exhibit a gradient increase. In this embodiment, the gradient variation rules may include, but are not limited to gradient changes in the vertical distance h, gradient changes in the width of bottom surface c; gradient changes in the vertex angle α; and combined gradient variations of the above parameters. These structural adjustments optimize the visible range by altering the reflection direction of light rays.

In a preferred embodiment of the present application, the random structure 122 comprises convex or concave surface microstructures. FIG. 3 illustrates two common configurations of such random structures. In this embodiment, the shapes of the convex or concave surface microstructures may include, but are not limited to, spherical, ellipsoidal, or other regularly or irregularly arranged geometries, as well as superimposed configurations of multiple geometries, which will not be redundantly detailed herein. The present application further adjusts the reflection direction of projected light through these convex or concave surface microstructures, thereby optimizing the visible range.

In a preferred embodiment of the present application, the substrate layer 11 serves to support the microstructure layer 12 and facilitate adhesion to a transparent substrate. The substrate layer 11 may be a single-layer film or a composite film with adhesive backing. The single-layer film can be bonded to the transparent substrate via a subsequent laminating process, while the composite film can be directly adhered to the transparent substrate. The display layer 13 is formed by coating a metal or metal oxide onto the second surface of the microstructure layer through a deposition process, and is configured to display projected images. Compared to the microstructure layer 12, the display layer 13 is significantly thinner, with a thickness at the nanoscale (not exceeding 100 nm). In contrast, the microstructure layer 12 has a thickness at the microscale (typically above 5 µm). Generally, the thickness ratio of the display layer 13 to the microstructure layer 12 exceeds 50: 1. The refractive index matching layer 14 has a second refractive index n2 that is identical or closely matched to the first refractive index n1 of the microstructure layer 12. This requires the refractive index matching layer 14 and the microstructure layer 12 to be fabricated from the same or similar materials. Materials for the refractive index matching layer 14 may include, but are not limited to, acrylic resin, silicone resin, polyurethane, or combinations thereof. The fabrication process for the refractive index matching layer 14 may employ thermal curing, UV curing, or a combination thereof. The refractive index matching layer 14 primarily functions to enable visibility of real-world scenes behind the projection screen by eliminating distortion and chromatic aberration through refractive index matching layer 14.

Under the same inventive concept, the present application further provides a transparent projection system comprising the aforementioned transparent projection film and a short focus projector, wherein the short focus projector has a throw ratio range from 0.2 to 1. In the transparent projection system of the present application, the projected image size generally ranges from 20 inches to 200 inches, preferably 40 inches to 80 inches. Depending on the image size, the horizontal distance between the short focus projector and the screen formed by the transparent projection film is controlled within 4 cm to 90 cm. The short focus projector may be placed upright or inverted.

Under the same inventive concept, the present application further provides a method for preparing the aforementioned transparent projection film 1, comprising the following steps:
S1. preparation of a template with surface microstructures: perform repairing and electroplating processes sequentially on a roller blank; place the electroplated roller blank on a machining tool; and obtain the template with surface microstructures using conventional machining techniques;
S2. preparation of the microstructure layer 12: prepare a substrate layer 11 having a lower surface and an upper surface of the substrate layer opposite thereto; position the upper surface of the substrate layer beneath the template with surface microstructures; apply a first optically transparent resin between the substrate layer 11 and the template, allowing the resin to conform to the surface microstructures of the template to form a film; and cure the resin to obtain the microstructure layer 12;
S3. preparation of the display layer 13: the microstructure layer 12 has an upper surface and a lower surface, with the lower surface of the microstructure layer 12 adjacent to the upper surface of the substrate; deposit a coating on the upper surface of the microstructure layer to form the display layer 13;
S4. preparation of the refractive index matching layer 14: apply a second optically transparent resin onto the display layer 13; form a film and cure to obtain the refractive index matching layer 14.

Based on the above preparation method for the transparent projection film 1, the microstructure layer 12 of the present application can be fabricated through a combination of conventional machining techniques. The prism structures 121 are readily formed via mechanical engraving, which allows precise control over their vertex angle α (α≥55°) during the engraving process. The base angle β, defined as the angle between side surface b and bottom surface c of the prism structure 121, is typically adjusted within 15° to 35° based on the projector's throw ratio and observer position. To achieve the aforementioned structure, in a preferred implementation of the preparation method: In step S1, the angle of the prism structure is 10° to 40°, preferably 20° to 25°; In step S1, the depth of the prism structure is 2 µm to 30 µm, preferably 15 µm to 20 µm.

The random structure 122 on the prism structure 121 is generally prepared during the fabrication of the template with surface microstructures via a shot peening process. While the present application is not limited to shot peening, other coating processes may also be employed. However, the shot peening process disclosed herein has been experimentally validated as suitable for industrial-scale production.In a preferred embodiment, during the preparation of the template with surface microstructures (Step S1): the electroplating material is selected from copper, nickel, or chromium; these processes may configure the surface of the electroplated roller blank with concave surface microstructures. Alternatively, the surface of the electroplated roller blank may be configured with convex surface microstructures. This is typically achieved by coating an adhesive containing microspheres onto the surface of the prism structure, where the microspheres adhere to the prism structure surface.

In a preferred embodiment of the present application, the surface roughness of the microstructure layer 12 can be adjusted by controlling the particle size and concentration of the shot peening process, thereby modulating the viewing angle of the transparent projection film 1. Preferably, the random microstructures have a depth range from 0.1 µm to 5 µm and a width range from 3 µm to 50 µm.

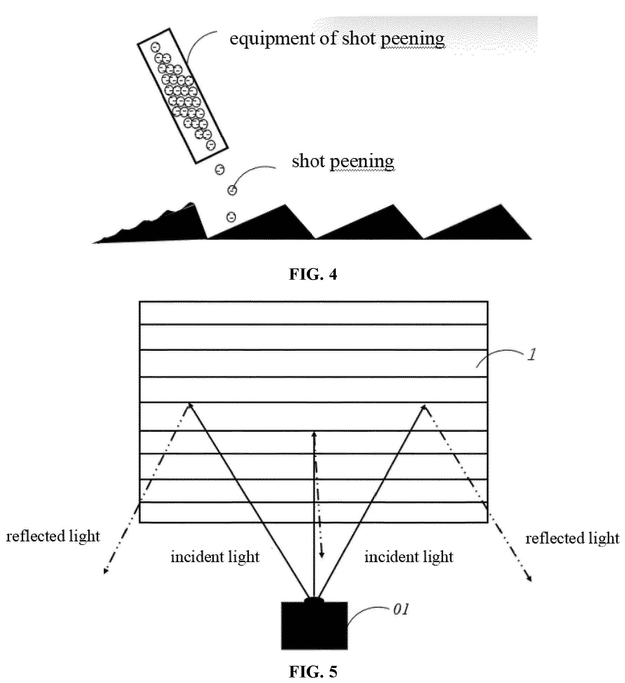

In the specific process of preparing the template with surface microstructures as part of the preferred embodiment: repairing and electroplating processes are performed on the roller blank. The repairing process primarily lathes the roller blank into a concentric cylinder. Due to the high hardness of the roller blank, cutter abrasion during microstructure engraving is significant. Therefore, an electroplating process is applied to the roller blank surface after repair. The electroplating material may be selected from copper, nickel, or chromium. Shot peening is performed along the longitudinal edge of the prism structure at a controlled angle. This angle may be perpendicular to the longitudinal edge or inclined relative to it, as illustrated in FIG. 4. This method enables precise regulation of the reflection direction of through angular adjustments.

From the perspective of field-of-view (FOV) optimization: conventional transparent reflective films exhibit wide FOVs in both vertical and horizontal directions. However, they fail to correct light emitted from the short focus projector 01, resulting in non-uniform brightness. Transparent projection films 1 with Fresnel structures focus light in two directions, thereby restricting the horizontal FOV. In confined spaces, this limitation prevents observers on either side from clearly viewing the projected image. In contrast, the transparent projection film 1 of the present application incorporates a microstructure layer 12 with prism structures 121. During installation, the short focus projector 01 and the transparent projection film 1 may be aligned in a specific positional configuration to ensure that light emitted from the projector enters the longitudinal edges of the prism structures 121 in the microstructure layer 12. FIG. 5 schematically illustrates the structure of the projection system constructed with the transparent projection film 1 and the short focus projector 01. The lateral prism structures 121 correct light in the vertical direction, while minimally adjusting lateral light without extensive correction. This design simultaneously reduces light loss in the vertical direction and expands the horizontal viewing angle for observers.

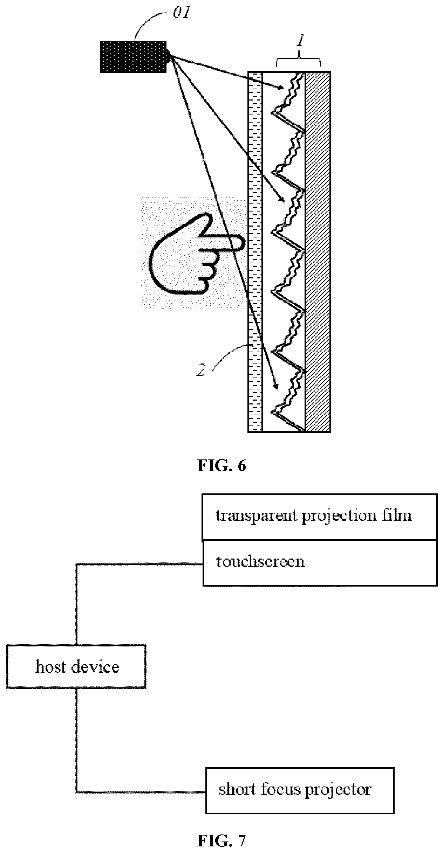

In a preferred embodiment of the present application, the transparent projection film 1 may further comprise a touchscreen 2, as shown in FIG. 6. The touchscreen 2 is disposed on the first surface of the refractive index matching layer 14. The touchscreen 2 may be bonded to the first surface of the refractive index matching layer 14 via an adhesive backing or a laminating process. The adhesive backing may include, but is not limited to, acrylic adhesive, silicone adhesive, or similar materials. The touchscreen 2 may include, but is not limited to, a touch-sensitive film, an infrared sensing screen, a laser sensing screen, or combinations thereof. The touchscreen 2 is equipped with a circuit interface connected to a host device. As illustrated in FIG. 7, when the short focus projector 01 and the touchscreen (2) are connected to the host device, images from the host device are projected onto the transparent projection film 1 via the short focus projector 01. Concurrently, the touchscreen 2 functions analogously to a mouse, enabling interactive operations on the projected images and thereby enhancing the human-machine interaction experience.

In a preferred embodiment of the present application, the substrate layer 11, the microstructure layer 12, and the refractive index matching layer 14 may all be fabricated from flame-retardant materials. The substrate layer 11 maintains a transmittance of over 88%. During fabrication, the microstructure layer 12 and refractive index matching layer 14 may employ the same adhesive, such as UV-curable acrylic adhesive, with flame-retardant additives incorporated. The additives are preferably halogen-free reactive flame retardants, including but not limited to: organic phosphorus-based, organic nitrogen-based, or phosphorus-nitrogen flame retardants. Flame retardancy tests were conducted on both non-flame-retardant transparent projection films 1 and flame-retardant transparent projection films 1. Specific results are summarized in Table 1 below:

**Table 1: Flame Retardancy Test Results of Non-Flame-Retardant and Flame-Retardant Transparent Projection Films**

| Sample | Transmittance | Haze | Burning Time | Damage Length |
|---|---|---|---|---|
| Flame-Retardant | 88.9% | 0.76% | <5 s | <50 mm |
| Non-Flame-Retardant | 89.1% | 0.68% | 15 s | 250 mm |

As shown in Table 1, the flame-retardant transparent projection film 1 exhibits superior flame-retardant performance.

In summary, the present application provides a transparent projection film 1 in which the microstructure layer 12 is composed of prism structures 121 with corrected angles and random structures 122 formed on the prism structures 121 to provide light-diffusing functionality. This structural design enables the transparent projection film 1 to deliver uniformly bright images with a wide viewing angle when used with a short focus projector 01. Furthermore, the microstructure layer 12 can be fabricated using conventional machining techniques, resulting in a simple preparation process, low cost, and suitability for mass production.

Although this specification describes the invention in terms of specific embodiments, each embodiment is not limited to a single independent technical solution. This narrative approach is adopted for clarity, and those skilled in the art should interpret the specification as a whole. Technical solutions across different embodiments may also be appropriately combined to form other implementations understandable to skilled practitioners.

The detailed descriptions provided above are merely illustrative of feasible embodiments of the present invention and are not intended to limit its protection scope. Any equivalent implementations or modifications made without departing from the spirit of the invention shall fall within the protection scope of the present invention.

## Claims

1. A transparent projection film, **characterized in that** it comprises:
a substrate layer having a first surface and a second surface arranged oppositely and parallel to each other, wherein both the first surface and the second surface are flat;
a microstructure layer comprising a plurality of prism structures extending along a first direction and arranged parallelly along a second direction on the second surface of the substrate layer, wherein the first direction intersects the second direction; a surface of each prism structure adjacent to the second surface of the substrate layer is defined as a bottom surface c, and a plurality of said bottom surfaces c form a first surface of the microstructure layer; surfaces of each prism structure away from the second surface of the substrate layer are defined as a side surface a and a side surface b, and a plurality of said side surfaces a and b form a second surface of the microstructure layer; an angle between the side surface a and the side surface b is defined as a vertex angle α of the prism structure, wherein α≥55°; an angle between the side surface b and the bottom surface c is defined as a base angle β of the prism structure, wherein 15°<β<35°; the side surface b is oriented toward a direction of a short focus projector, and a random structure is disposed on the side surface b; the microstructure layer has a first refractive index n1;
a display layer having a first surface and a second surface arranged oppositely, wherein the first surface of the display layer is disposed on the second surface of the microstructure layer; the second surface of the display layer is substantially conformal to the second surface of the microstructure layer, such that the display layer adopts a structure substantially identical to the second surface of the microstructure layer;
a refractive index matching layer having a first surface and a second surface arranged oppositely, wherein the first surface of the refractive index matching layer is disposed on the second surface of the display layer and conformal to the second surface of the display layer; the second surface of the refractive index matching layer is parallel to the first surface of the substrate layer; the refractive index matching layer has a second refractive index n2;
wherein the first refractive index n1 and the second refractive index n2 are identical or closely matched.

2. The transparent projection film according to claim 1, **characterized in that** a vertical distance h from an intersection of the side surface a and the side surface b to the bottom surface c is defined, wherein the vertical distance h, the vertex angle α, and a size of the bottom surface c of each prism structure remain unchanged or exhibit a gradient increase along the first direction.

3. The transparent projection film according to claim 1, **characterized in that** the random structure comprises convex or concave surface microstructures.

4. The transparent projection film according to any one of claims 1-3, **characterized in that** the transparent projection film further comprises a touchscreen disposed on the first surface of the refractive index matching layer.

5. The transparent projection film according to claim 1, **characterized in that** the substrate layer, the microstructure layer, and the refractive index matching layer are made of flame-retardant materials.

6. The transparent projection film according to claim 5, **characterized in that** the flame-retardant materials are organic phosphorus-based, organic nitrogen-based, or phosphorus-nitrogen flame retardants.

7. A transparent projection system, **characterized in that** it comprises the transparent projection film according to any one of claims 1-6 and a short focus projector with a throw ratio range from 0.2 to 1.

8. A preparation method of the transparent projection film according to any one of claims 1-6, **characterized in that** it comprises the following steps:
S1. preparation of a template with surface microstructures: perform repairing and electroplating processes sequentially on a roller blank; place the electroplated roller blank on a machining tool; and obtain the template with surface microstructures using conventional machining techniques;
S2. preparation of the microstructure layer: prepare a substrate layer having a lower surface and an upper surface of the substrate layer opposite thereto; position the upper surface of the substrate layer beneath the template with surface microstructures; apply a first optically transparent resin between the substrate layer and the template, allowing the resin to conform to the surface microstructures of the template to form a film; and cure the resin to obtain the microstructure layer;
S3. preparation of the display layer: the microstructure layer has an upper surface and a lower surface of the microstructure layer, with the lower surface of the microstructure layer adjacent to the upper surface of the substrate; deposit a coating on the upper surface of the microstructure layer to form the display layer;
S4. preparation of the refractive index matching layer: apply a second optically transparent resin onto the display layer; form a film and cure to obtain the refractive index matching layer.

9. The preparation method according to claim 8, **characterized in that** in step S1, an angle of the prism structure is 10° to 40°, preferably 20° to 25°.

10. The preparation method according to claim 8, **characterized in that** in step S1, a depth of the prism structure is 2 µm to 30 µm, preferably 15 µm to 20 µm.

11. The preparation method according to claim 8, **characterized in that** in step S1, the electroplating material is copper, nickel, or chromium.

12. The preparation method according to claim 8, **characterized in that** the random microstructure has a depth range from 0.1 µm to 5 µm and a width range from 3 µm to 50 µm.
